# EUROPEAN PATENT APPLICATION

(11) **EP 4 681 845 A1**
(43) Date of publication of application: **21.01.2026**
(21) Application number: 25186426.0
(22) Date of filing: 30.06.2025
(51) Int. Cl.: B22F 5/00, B22F 10/28, B22F 10/25, B22F 10/66, B22F 10/64, B33Y 10/00, B33Y 80/00, C22C 1/04, C22C 19/05

(54) **ADDITIVE MANUFACTURING TECHNIQUES TO REDUCE CHEMICAL SEGREGATION USING NIMO SUPERALLOY**

(30) Priority: 28.06.2024 US 202418758398
(71) Applicant: RTX Corporation, Farmington, CT 06032 (US)
(72) Inventor: ASARE, Ted, Glastonbury, 06033 (US)
(74) Representative: Dehns

(57) **Abstract**

A method of making a component using additive manufacturing (AM) techniques that selecting an AM manufacturing process suitable for making the component; selecting a material for the component that is compatible with the AM manufacturing component; selecting and programming AM process steps into a selected AM apparatus; and building the component on the selected AM apparatus using the selected AM process steps. The AM process steps are selected to produce a plurality of melt pools (32) that reduce material segregation in the finished part (30). The component exhibits reduced material segregation compared to making the material with a consumable electrode remelting process. The component made with AM techniques includes a region exhibiting reduced material segregation compared to making the material with a consumable electrode remelting process.

## Description

The present disclosure relates generally to additive manufacturing techniques and, more particularly, to additive manufacturing techniques for making components using molybdenum-containing superalloys.

Selection of appropriate materials based on the environment to which they will be exposed is a common consideration for many engineering applications. For example, for certain applications it may be desirable for the selected material to have specified thermal expansion, low cycle fatigue, and thermal stability properties. In other applications, the focus may be on corrosion resistance in certain challenging environments, such as high temperature oxidizing environments, hydrogen environments, fluorine environments, and other environments. For certain aero and industrial gas turbine engines applications, such as seals, retainer rings, casings, and fasteners, it can be desirable to select materials that exhibit relatively low coefficients of thermal expansion, have low cycle fatigue properties and very good thermal stability.

### SUMMARY

One aspect of this disclosure is directed to a method of making a component using additive manufacturing (AM) techniques that includes selecting an AM manufacturing process suitable for making the component; selecting a material for the component that is compatible with the AM manufacturing component; selecting and programming AM process steps into a selected AM apparatus; and building the component on the selected AM apparatus using the selected AM process steps. The AM process steps are selected to produce a plurality of melt pools that reduce material segregation in the finished part. The component exhibits reduced material segregation compared to making the material with a consumable electrode remelting process.

Another aspect of this disclosure is directed to a component made with AM techniques that includes a region exhibiting reduced material segregation compared to making the material with a consumable electrode remelting process.

### BRIEF DESCRIPTION OF THE DRAWINGS

Fig. 1 is a schematic of melt pool of Haynes^{®} 242^{®} alloy showing molybdenum segregation.
Fig. 2 is a flowchart of the additive manufacturing technique of this disclosure.
Fig. 3 is a schematic of Haynes^{®} 242^{®} alloy part with formed with the additive manufacturing technique of this disclosure.

### DETAILED DESCRIPTION

As discussed above, selection of appropriate materials based on the environment to which they will be exposed is a common consideration for many engineering applications. For example, for certain aero and industrial gas turbine engines applications such as seals, retainer rings, casings, and fasteners, it can be desirable to select materials that exhibit relatively low coefficients of thermal expansion, have low cycle fatigue properties and very good thermal stability. Materials often selected for such applications include Inconel 783 alloy and Haynes^{®} 242^{®} alloy.

Inconel 783 alloy is an oxidation resistant low coefficient of thermal expansion (low CTE) superalloy developed for gas turbine applications, particularly for applications for which closer control of clearances and tolerances for greater power output and fuel efficiency is desirable. Inconel 783 alloy has a nominal chemical composition in weight percent of:

### Inconel 783 Alloy Nominal Chemical Composition (weight percent)

| Cobalt (Co) | Balance |
|---|---|
| Nickel (Ni) | 26.0-30.0 |
| Iron (Fe) | 24.0-27.0 |
| Aluminum (Al) | 5.0-6.0 |
| Chromium (Cr) | 2.5-3.5 |
| Niobium (Ni) | 2.5-3.5 |
| Titanium (Ti) | 0.1-0.4 |
| Boron (B) | 0.003-0.012 |
| Copper (Cu) | 0.50 max |
| Manganese (Mn) | 0.50 max |
| Silicon (Si) | 0.50 max |
| Carbon (C) | 0.03 max |
| Phosphorus (P) | 0.015 max |
| Sulfur (S) | 0.005 max |

Haynes^{®} 242^{®} alloy, available from Haynes International (owner of the Haynes^{®} and 242^{®} trademarks) and various alloy suppliers, is also an oxidation resistant low CTE superalloy that is well suited of gas turbine applications for which closer control of clearances and tolerances for greater power output and fuel efficiency is desirable. Such gas turbine applications include but are not limited to seals, retainer rings, casing and fasteners where dimensional stability is important to proper functioning of the engine. Haynes^{®} 242^{®} alloy also exhibits resistance to high-temperature fluorine and other fluoride environment, making it suitable for use in various chemical process industry applications and other applications uses in fluoride environments. Haynes^{®} 242^{®} alloy has a nominal chemical composition in weight percent of:

### Haynes^{®} 242^{®} Alloy Nominal Chemical Composition (weight percent)

| Nickel (Ni) | Balance |
|---|---|
| Molybdenum (Mo) | 25 |
| Chromium (Cr) | 8 |
| Iron (Fe) | 2 max |
| Cobalt (Co) | 1 max |
| Manganese (Mn) | 0.8 max |
| Silicon (Si) | 0.8 max |
| Aluminum (Al) | 0.5 max |
| Carbon (C) | 0.03 max |
| Boron (B) | 0.006 max |

As shown in the table above, Haynes^{®} 242^{®} alloy comprises a substantial amount of molybdenum (Mo), which is a relatively heavy element. Conventional methods of Haynes^{®} 242^{®} alloy manufacture include consumable electrode remelting in electroslag remelting (ESR) and vacuum arc remelting (VAR). As described below, ESR or VAR processes used for Haynes^{®} 242^{®} alloy production can lead to chemical segregation of Mo that manifests as a non-uniform microstructure and non-uniform and non-conforming mechanical properties of components manufactured using billets converted from a consumable melted ingot.

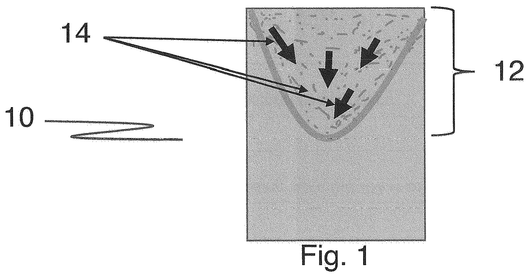

Fig. 1 shows an ingot **10** of Haynes^{®} 242^{®} alloy made with a conventional process such as ESR or VAR. During a final melting step common in such processes, a deep melt pool **12** leads to segregation of heavy metals **14,** such as Mo, migrating to the bottom **16** of the melt pool **12.** The resulting ingot **10** can have a non-uniform microstructure and non-uniform and non-conforming mechanical properties. Quality assurance testing of billets and forgings manufactured from the ingot **10** can result in mixed pass/fail results based on the location in the ingot **10** where sample is taken. Such results can be undesirable for applications that require uniform mechanical properties that meet all specified specifications.

Other alloys that include a substantial amount of Mo or other heavy elements, including but not limited to a range of experimental superalloys developed by the US Department of Energy National Energy Technology Laboratory (DOE NETL) in Albany, Oregon, can exhibit similar chemical segregation of heavy elements during conventional ESR, VAR, and similar casting processes. Examples of such alloys are designated in the following table, which shows nominal compositions in weight percent, as Alloy J5, Alloy J15, and Alloy J16. These alloys, the similar Haynes^{®} 242^{®} alloy, and other alloys that include a substantial amount of Mo will be referred to collectively in this disclosure as "high Mo Ni-based superalloys" and will be viewed as including alloys that comprise Ni as the predominant element with at least 15 weight percent Mo and no more than 12.5 weigh percent Cr. The high Mo Ni-based superalloys may further comprise minor elements including but not limited to: W, Ti, Mn, Al, Y, Fe, Co, Si, B, and/or C.

### Alloy J5, Alloy J15, and Alloy J16 Nominal Chemical Composition (weight percent)

| | Alloy J5 | Alloy J15 | Alloy J16 |
|---|---|---|---|
| Nickel (Ni) | Balance | Balance | Balance |
| Molybdenum (Mo) | 22.5 | 17.5 | 15.5 |
| Chromium (Cr) | 12.5 | 12.5 | 12.5 |
| Tungsten (W) | 0 | 5 | 7 |
| Titanium (Ti) | 1 | 1 | 1 |
| Manganese (Mn) | 0.5 | 0.5 | 0.5 |
| Aluminum (Al) | 0.1 | 0.1 | 0.1 |
| Yttrium (Y) | 0.1 | 0.1 | 0.1 |
| Carbon (C) | 0 | 0 | 0 |

Instead of using the traditional consumable electrode remelting processes such as ESR and VAR described above, chemical segregation of heavy elements can be reduced by using additive manufacturing (AM) to make high Mo Ni-based superalloy parts, including but not limited to making parts with Haynes^{®} 242^{®} alloy, alloy J5, alloy J15, and alloy J16. AM techniques can be used to form a plurality of small and shallow melt pools during the AM campaign versus a single, large and deep melt pool that characterizes the consumable electrode remelting process. For example, the melt pool depth for a traditional consumable VAR electrode process can be as large as 20 inches (508 mm) at the surface and as deep as 7.6 inches (193 mm) resulting in a slower solidification rate that allows heavy elements such as Mo to segregate. Melt pools associated with an ESR electrode process can be even deeper. By contrast, melt pools associated with AM methods can have a width of less than 0.02 inches (0.5 mm) and a depth of less than 0.007 inches (0.18 mm). The smaller, shallower melt pools associated with AM methods (e.g., up to 1000 times smaller than melt pools associated with VAR and ESR processes) result in faster solidification rates and less segregation of heavy elements such as Mo. As discussed below, the resulting high Mo Ni-based superalloy parts will exhibit less chemical segregation of heavy elements.

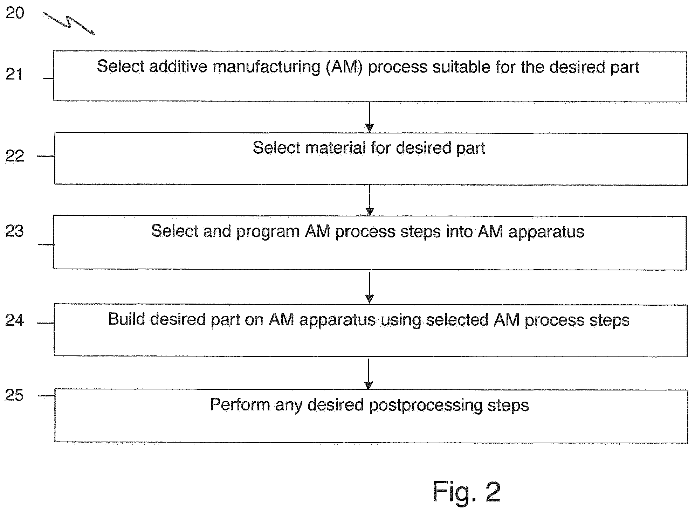

As shown in Fig. 2, a method **20** of making high Mo Ni-based superalloy parts, such as Haynes^{®} 242^{®} alloy parts, to reduce chemical segregation starts at step **21** with selection of a suitable AM process. Due to material processing considerations, it may be desirable to use a powder-based process such as a laser beam powder bed fusion process (PBF-LB), an electron beam powder bed fusion process (PBF-EB), or another powder-based AM process due to the ability to control melt pool depth. For some applications, powder-based direct energy deposition (DED) processes may also be used, provided that melt pool depth can be well controlled. Such processes are well known to those skilled in the art and will, therefore, not be described in detail in this disclosure. Of course, limitations of the selected AM process should be considered, including the size and geometry of parts to be formed. Depending on the part to be formed, other AM processes, including but not limited to wire-based AM processes, may be used.

At step **22,** the material to be used to form the high Mo Ni-based superalloy parts is selected. Selection considerations include composition and format. For many applications, the material composition will be one of the materials discussed above that comprise Ni as the predominant element with at least 15 weight percent Mo and no more than 12.5 weigh percent Cr. Suitable alloys include but are not limited to Haynes^{®} 242^{®} alloy, alloy J5, alloy J15, and alloy J16. The format of the material depends on the AM process selected in step **21.** For example, if a powder-based AM process is selected, the material should be in a powder format. The specific parameters for the powder (e.g., particle size, weldability, etc.) should be selected to be compatible with the selected AM process and the specific apparatus used for the AM process.

At step **23,** the process steps for the AM process are selected and programmed into a controller for the AM process apparatus. For the most part, the process steps should be the conventional steps used for the selected AM process to make the desired part. To obtain the desired reduction in chemical segregation, the material feed rate (e.g., powder feed rate), material layer depth (e.g., powder bed depth), energy source (e.g., laser beam, electron beam, etc.) power level and scan pattern, and other relevant process parameters, should be selected to produce a plurality of shallow melt pools that will reduce the opportunity of chemical segregation of the selected material. The specific depth of the melt pool can be customized for each part to provide the desired results as described further below.

At step **24,** the part is built on the selected AM apparatus using the selected AM process steps. At optional step **25,** the part can be further processed after AM processing to consolidate powder (e.g., by a hot isostatic processing step), provide a heat treatment, to impart residual compressive steps (e.g., with a peening process), machining to final dimensions, or any other desired postprocessing steps.

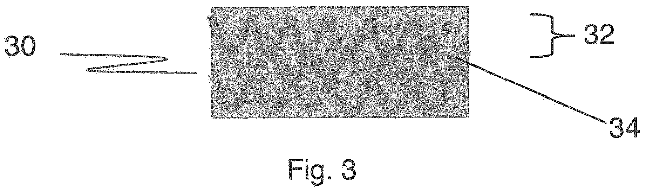

As shown in Fig. 3, a part **30** made using the AM method **20** described above includes a plurality of relatively shallow melt pools **32.** Each of the relatively shallow melt pools **32** is not as deep as the single melt pool **12** formed using the consumable electrode remelting process illustrated in Fig. 1. While the relatively shallow melt pools **32** of Fig. 3 show a degree of localized segregation of heavy metals **34,** the segregation of heavy metals **34** is much less pronounced than the segregation of heavy metals **14** illustrated in Fig. 1. As a result, the part **30** made using the AM method **20** described above will have much more uniform physical properties than the ingot **10** made using the consumable electrode remelting process. For example, the part **30** will have a more uniform microstructure and more uniform and conforming mechanical properties as compared to the ingot **10** and may exhibit residual properties of having been formed with AM process steps selected to produce a plurality of melt pools that reduce material segregation in the finished part. As discussed above, the depth of the plurality of melt pools **32** made with the disclosed AM process can be controlled by selecting desired parameters such powder properties, powder feed rate, and energy source power and scan rate. As discussed above, the part **30** may be a gas turbine component such as a seal, retainer ring, casing, or fastener for which dimensional stability is important to proper functioning of the engine.

### Discussion of Possible Embodiments

The following are non-exclusive descriptions of possible embodiments of the present invention.

A method of making a component using additive manufacturing (AM) techniques includes selecting an AM manufacturing process suitable for making the component; selecting a material for the component that is compatible with the AM manufacturing component; selecting and programming AM process steps into a selected AM apparatus; and building the component on the selected AM apparatus using the selected AM process steps. The AM process steps are selected to produce a plurality of melt pools that reduce material segregation in the finished part. The component exhibits reduced material segregation compared to making the material with a consumable electrode remelting process.

The method of the preceding paragraph can optionally include any one or more of the following features, configurations and/or additional elements:
The method of the preceding paragraph, further including performing one or more postprocessing steps on the component following completion of an AM build operation.

The method of the preceding paragraph, wherein the one or more postprocess steps include one or more of hot isostatic pressing, heat treating, imparting residual compressive stresses, and machining to final dimensions.

The method of any of the preceding paragraphs, wherein the component comprises a high Mo Ni-based superalloy material.

The method of the preceding paragraph, wherein the superalloy material is one of Haynes^{®} 242^{®} alloy, alloy J5, alloy J15, and alloy J16.

The method of any of the preceding paragraphs, wherein the AM manufacturing process is a powder process.

The method of the preceding paragraph, wherein the powder process is laser powder bed fusion (PBF-LB), electron beam powder bed fusion (PBF-EB), or direct energy deposition (DED).

The method of the preceding paragraph, wherein the AM manufacturing process is a wire-based process.

The method of any of the preceding paragraphs, wherein the component is a gas turbine engine component.

The method of the preceding paragraph, wherein the gas turbine engine component is a seal, retainer ring, casing, or fastener.

A component made with additive manufacturing (AM) techniques, comprises a region exhibiting reduced material segregation compared to making the material with a consumable electrode remelting process.

The component of the preceding paragraph can optionally include any one or more of the following features, configurations and/or additional elements:
The component of the preceding paragraph, wherein the region exhibiting reduced material segregation shows residual properties of having been formed with AM process steps selected to produce a plurality of melt pools that reduce material segregation in the finished part.

The component of the preceding paragraph, wherein the component comprises a high Mo Ni-based superalloy material.

The component of the preceding paragraph, wherein the superalloy material is one of Haynes^{®} 242^{®} alloy, alloy J5, alloy J15, and alloy J16.

The component of any of the preceding paragraphs, wherein the component is a gas turbine engine component.

The component of the preceding paragraph, wherein the gas turbine engine component is a seal, retainer ring, casing, or fastener.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making a component using additive manufacturing (AM) techniques, comprising:
selecting an AM manufacturing process suitable for making the component;
selecting a material for the component that is compatible with the AM manufacturing component;
selecting and programming AM process steps into a selected AM apparatus, wherein the AM process steps are selected to produce a plurality of melt pools (32) that reduce material segregation in the finished part (30); and
building the component on the selected AM apparatus using the selected AM process steps, wherein the component exhibits reduced material segregation compared to making the material with a consumable electrode remelting process.

2. The method of claim 1, further comprising performing one or more postprocessing steps on the component following completion of an AM build operation.

3. The method of claim 2, wherein the one or more postprocess steps include one or more of hot isostatic pressing, heat treating, imparting residual compressive stresses, and machining to final dimensions.

4. The method of claim 1, 2 or 3, wherein the component comprises a high Mo Ni-based superalloy material.

5. The method of claim 4, wherein the superalloy material is one of Haynes^{®} 242^{®} alloy, alloy J5, alloy J15, and alloy J16.

6. The method of any preceding claim, wherein the AM manufacturing process is a powder process.

7. The method of claim 6, wherein the powder process is laser powder bed fusion (PBF-LB), electron beam powder bed fusion (PBF-EB), or direct energy deposition (DED).

8. The method of any of claims 1 to 5, wherein the AM manufacturing process is a wire-based process.

9. The method of any preceding claim, wherein the component is a gas turbine engine component.

10. A component made with additive manufacturing (AM) techniques, comprising:
a region exhibiting reduced material segregation compared to making the material with a consumable electrode remelting process.

11. The component of claim 10, wherein the region exhibiting reduced material segregation shows residual properties of having been formed with AM process steps selected to produce a plurality of melt pools (32) that reduce material segregation in the finished part (30).

12. The component of claim 10 or 11, wherein the component comprises a high Mo Ni-based superalloy material.

13. The component of claim 12, wherein the superalloy material is one of Haynes^{®} 242^{®} alloy, alloy J5, alloy J15, and alloy J16.

14. The component of claim 10, 11, 12 or 13, wherein the component is a gas turbine engine component.

15. The method of claim 9 or the component of claim 14, wherein the gas turbine engine component is a seal, retainer ring, casing, or fastener.
